Europäisches Patentamt

European Patent Office

Office européen des brevets

(11) Veröffentlichungsnummer: **0 341 316**
A1

## (12) EUROPÄISCHE PATENTANMELDUNG

Veröffentlicht nach Art. 158 Abs. 3 EPÜ

(21) Anmeldenummer: **88909645.9**

(22) Anmeldetag: **18.10.88**

Daten der zugrundeliegenden internationalen Anmeldung:

(86) Internationale Anmeldenummer:
**PCT/SU88/00200**

(87) Internationale Veröffentlichungsnummer:
**WO89/03984 (05.05.89 89/10)**

(51) Int. Cl.³: **G 01 N 1/10**

(30) Priorität: **20.10.87 SU 4314854**
**28.03.88 SU 4393405**

(43) Veröffentlichungstag der Anmeldung:
**15.11.89 Patentblatt 89/46**

(84) Benannte Vertragsstaaten:
**CH DE FR GB IT LI SE**

(71) Anmelder: **INSTITUT METALLURGII IMENI
A.A.BAIKOVA AKADEMII NAUK SSSR
Leninsky pr., 49
Moscow, 117334(SU)**

(72) Erfinder: **SNIGIR, Alexandr Nikolaevich
Litovsky Bulvar, 18-204
Moscow, 117588(SU)**

(72) Erfinder: **DUDIK, Andrei Viktorovich
ul. Zelenogradskaya, 19-35
Moscow, 125475(SU)**

(72) Erfinder: **KURITNYK, Igor Petrovich
ul. Druzhby, 1-8
Lvov, 290034(SU)**

(72) Erfinder: **FEDINETS, Vasily Alexeevich
ul. Fedorenko, 32-41
Lvov, 290031(SU)**

(74) Vertreter: **Nix, Frank Arnold, Dr.
Kröckelbergstrasse 15
D-6200 Wiesbaden(DE)**

㊸ **MUSTERNAHME ZUR BESTIMMUNG DER QUALITATIVEN PARAMETER VON SCHMELZSTAHL.**

㋒ Der Probenehmer enthält ein Außenrohr (1) und ein Innenrohr (2), die im oberen Teil miteinander verbunden sind. Das Außenrohr hat eine Haube (5), deren oberer Abschnitt in Form eines abgestumpften Kegels (7) ausgebildet ist. Auf dem Abschnitt des abgestumpften Kegels (7), der an das Rohr (1) angrenzt, ist eine Öffnung (6) zur Entnahme der Metallschmelze ausgeführt. In dem unteren Teil des Innenrohres (2) befindet sich ein Thermopaar (11).

FIG.1

# PROBENEHMER ZUR BESTIMMUNG VON QUALITÄTSPARAMETERN EINES SCHMELZGUTES

## Gebiet der Technik

Die vorliegende Erfindung bezieht sich auf das Hüttenwesen und betrifft insbesondere einen Probenehmer zur Bestimmung von Qualitätsparametern eines Schmelzgutes und zur Bestimmung einer optimalen Variante der Behandlung der Metallschmelze in der Pfanne.

## Zugrundeliegender Stand der Technik

Es ist ein Probenehmer zur Entnahme einer Metallschmelze weit bekannt, der einem aus einem Kernformstoff gefertigten Manteltiegel enthält, und in dessen Boden eine Zentralöffnung vorgesehen ist, durch welche in den Aufnahmehohlraum des Tiegels ein Thermopaar eingeführt wird, das mit einer feuerbeständigen Umkleidung versehen ist.

Jedoch geht in diesem Probennehmer die Abkühlung der Metallschmelze langsam vor sich, außerdem ist er gegenüber der Änderungen der Strukturausbildungsprozesse bei der Modifizierung oder bei Schwankungen der Zusammensetzung der zu analysierenden Schmelze nur wenig empfindlich.

Die langsame Abkühlung der Schmelze ist auf große Maße der Probe (ca. 100 bis 200 g), große Wandstärke des Tiegels (5 bis 8 mm) und auf Sandtonmaterial, aus dem der Tiegel gefertigt ist, zurückzuführen.

Die geringe Empfindlichkeit gegenüber der Änderung der Strukturausbildungsprozesse bei der Modifizierung oder bei Schwankungen der Zusammensetzung der zu analysierenden Schmelze wird dadurch bedingt, daß auf die innere Fläche des Probenehmers eine Tellurfarbe aufgetragen ist, die eine Kristallisation der Schmelze nach dem metastabilen System herbeiruft.

Es ist auch ein Probenehmer bekannt, bestehend aus einer Hülse aus einem niedriggekohlten Stahl mit Schlitzen in der Wand; in der Mitte der Hülse befinden sich ein Thermopaar in einer Schutzhaube, eine Buchse, die das Thermopaar in der Mitte des Aufnahmehohlraumes der Hülse fixiert.

Dieser Probenehmer gewährleistet eine schnelle Abkühlung der zu untersuchenden Metallprobe, und erhöht dadurch die Empfindlichkeit gegenüber den mit den Prozessen der Strukturausbildung verbundenen Wärmeeffekten.

Ein auf diese Weise gebauter Probenehmer ist jedoch mit folgenden Nachteilen behaftet:

- eine begrenzte technologische Möglichkeit des Einsatzes bei der Analyse von Legierungen mit einer hohen Schmelztemperatur oder mit einer hohen Überhitzungstemperatur der Schmelze, da seine Wände durchzuschmelzen beginnen;

- die Abhängigkeit der Legierungsstruktur von der Art der Wärmeableitung, z.B., der Wände der Hülse;

- die Notwendigkeit, Proben den Oberflächenschichten des Schmelzbades zu entnehmen, die gegenüber der Hauptmasse der Schmelze eine überflüssige Menge an Gasen, nichtmetallischen Einschlüssen und Schlacke enthalten können.

Es ist ein zylindrischer Probenehmer bekannt, bestehend aus einer Hülse zur Aufnahme des flüssigen Metalls, einem Thermopaar, einer Schutzhaube, einer Zentrierbuchse mit Öffnungen. Die Hülse zur Aufnahme des flüssigen Metalls ist aus Quarzglas oder Keramik mit einer kalibrierten Öffnung im Boden zur Entnahme der Schmelze ausgeführt (JP, A, 53-5957).

Jedoch zeichnet sich dieser Probenehmer durch eine niedrige Technologiegerechtheit, infolge der Notwendigkeit, ein inertes Gas zuzuführen; durch einen hohen Fehler bei der Bestimmung von Wärmeeffekten wegen der Ungleichmäßigkeit der Kristallisationsfront in der Probe aus, d.h., die Anordnung der Thermoelementlötstelle entspricht dem Wärmezentrum der kristallisationsfähigen Probe nicht.

Besonders nah an den vorgeschlagenen dem technischen Wesen und dem erzielbaren Ergebnis nach kommt ein Probenehmer, der aus einem dünnwandigen Quarzglas hergestellt ist, enthaltend ein Außenrohr, eine in Form einer Kugel ausgebildete Haube und eine Öffnung zur Entnahme einer Flüssigmetallprobe, die in der Wand des Pfropfens ausgebildet ist. In dem Wärmezentrum des Probenehmers befindet sich die Thermoelementlötstelle, die durch ein inneres Rohr geschützt ist, das im ersten Rohr angeordnet und mit ihm im oberen Teil verbunden ist ("Gießereiwesen", 1986, Moskau, Nr.3, S.30, 31).

Jedoch entstehen in einem so konstruierten Probenehmer Schwindlunker in der Metallprobe an der Vertikalachse des Probenehmers entlang. Wegen der Bildung der Schwindlunker im Kristallisationsprozeß der Probe befindet sich die Thremoelementlötstelle im Moment der Erstarrung nicht im Metall sondern im Schwindlunker, dies führt zu einer falschen Festlegung der Kristallisationskurve und als Folge davon zu einer falschen Analyse der Strukturausbildung der Legierung.

## Offenbarung der Erfindung

Der vorliegenden Erfindung liegt die Aufgabe zugrunde, einen Probenehmer zur Bestimmung von Qualitätsparametern des Schmelzgutes zu schaffen, bei dem die konstruktive Ausführung der Haube zum Unterbringen des Thermopaares darin es gestattet, die Bildung von Schwindlunkern im kristallisationsfähigen Metall auszuschließen und somit die Genauigkeit der Festlegung der Kristallisationskurve und der Analyse des Strukturausbildungsprozesses des Metalls zu erhöhen.

Die gestellte Aufgabe wird dadurch gelöst, daß in einem Probenehmer zur Bestimmung von Qualitätsparametern eines Schmelzgutes, bestehend aus koaxial ineinander angeordneten Quarzglasrohren, die im oberen Teil miteinander verbunden sind, wobei das Außenrohr in eine Haube übergeht, in der das zugelötete Ende des Innenrohrs zum Unterbringen darin eines Thermopaares angeordnet ist, und eine Öffnung zur Entnahme der Metallschmelze aufweist, gemäß der Erfindung die Öffnung zur Entnahme der Metallschmelze in der Haube auf ihrem an das Rohr angrenzenden Abschnitt ausgeführt ist.

Es ist zweckmäßig, den Abschnitt der Haube mit der Öffnung zur Entnahme der Schmelze in Form eines abgestumpften Kegels auszubilden.

In Übereinstimmung mit einer Ausführungsform des Probenehmers kann die Haube in Form eines Zylinders ausgebildet sein, dessen Boden- und oberer Abschnitt sphärisch ausgeführt sind, dabei ist die Öffnung zur Entnahme der Schmelze in dem oberen sphärischen Abschnitt vorgesehen.

Bei dem erfindungsgemäßen Probenehmer wurde die geometrische Form der Quarzhaube zur Entnahme des Flüssigmetallprobe geändert. Weist sie bei der Ausgangsausbildung die Form einer Kugel auf, so ist bei dem erfindungsgemäßen Probenehmer ihr oberer Teil in Form eines abgestumpften Kegels oder in Form eines Zylinders mit sphärischen Boden- und oberen Abschnitten ausgeführt, was die Möglichkeit bietet, die Bildung von Schwindlunkern in der Metallprobe zu vermeiden, die Kristallisationskurve der Legierung genauer festzulegen und die Genauigkeit der Analyse der Strukturausbildung zu erhöhen.

Geändert wurde die Lage der Öffnung zur Entnahme der Probe, was zu einem ungehinderten Einlauf der Schmelze in den Haubenraum bei der Entnahme der Metallprobe beiträgt und Bedingungen zur Bildung von Schwindlunkern ausschließt.

Im Ergebnis einer solchen konstruktiven Ausführung der Haube kann der Probenehmer für die Kristallisationsanalyse sowohl von Eisen-Kohlenstoff-, als auch von Nichteisenmetallegierungen verwendet werden.

## Kurze Beschreibung der Zeichnungen

Nachstehend wird die Erfindung an Hand eines Ausführungsbeispiels eines erfindungsgemäßen Probenehmers zur Bestimmung von Qualitätsparametern eines Schmelzgutes unter Bezugnahme auf die beiliegenden Zeichnungen näher erläutert.

Es zeigt:

Fig. 1 - die Gesamtansicht eines erfindungsgemäßen Probenehmers, im Schnitt;

Fig. 2 - eine andere Ausführungsform der Haube des Probenehmers, gemäß der Erfindung;

Fig. 3 - dito, wie in Fig. 1 mit einem darin erstarrten Metall;

Fig. 4 a, b, c - schematisch die Stellung des Probenehmers bei der Probeentnahme;

Fig. 5 einen bekannten Probenehmer, gefüllt mit erstarrtem Metall;

Fig. 6 - ein Diagramm der Metallkristallisation in dem erfindungsgemäßen und bekannten Probenehmer.

## Bevorzugte Ausführungsform der Erfindung

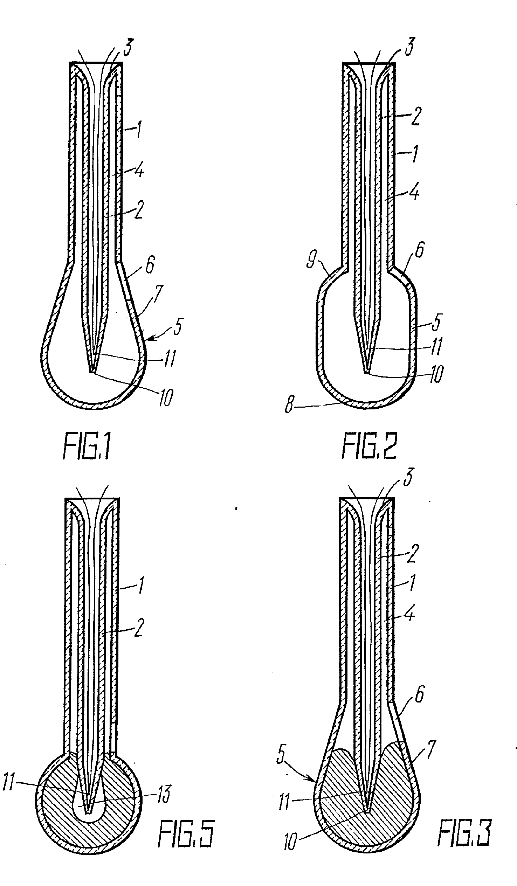

Der Probenehmer zur Bestimmung von Qualitätsparametern eines Schmelzgutes enthält ein Außenrohr 1 (Fig. 1, 2) und ein Innenrohr 2, die koaxial ineinander angeordnet und aus einem dünnwandigen Quarzglas hergestellt sind. Das Innen- und das Außenrohr 1 bzw. 2 sind im oberen Teil 3 miteinander zusammengelötet, so daß zwischen den Rohren 1 und 2 ein ringförmiger Hohlraum 4 entsteht.

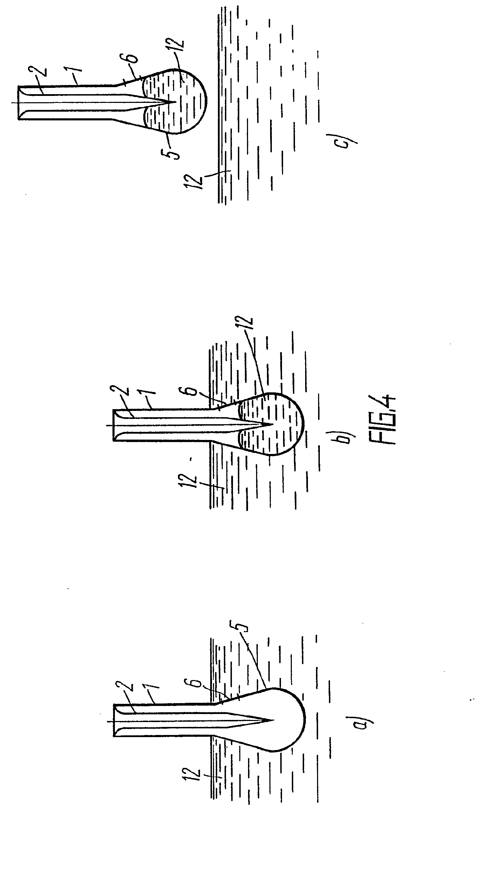

Das Außenrohr 1 geht in eine Haube 5 über, die mit einer Öffnung 6 zur Entnahme der Metallschmelze versehen ist. Die Haube 5 befindet sich in dem unteren Teil des Rohres 1, und ihr oberer Teil seitens des Rohres 1 ist in Form eines abgestumpften Kegels 7 ausgebildet. Die Öffnung 6 ist auf dem Abschnitt des abgestumpften Kegels 7 ausgeführt, der an das Rohr 1 angrenzt, wie in Fig. 1, 3 gezeigt ist.

Gemäß einer anderen Ausführungsform der Haube 5 des Probenehmers (Fig. 2) ist die Haube in Form eines Zylinders ausgebildet, dessen Boden 8 und oberer 9 Abschnitt sphärisch ausgebildet sind. Bei einer solchen Ausführungsform der Haube ist die Öffnung 6 zur Entnahme der Metallschmelze in dem oberen sphärischen Abschnitt 9 vorgesehen, der an das Rohr 1 angrenzt.

Das Innenrohr 2 hat ein unteres zugelötetes Ende 10, das in der Haube 5 liegt und zum Schutz eines Thermopaares 11 dient, das in das Innenrohr 2 eingeführt wird und in seinem unteren Ende zu liegen kommt (Fig. 1-3), d.h., im Wärmezentrum oder diesem nahen Bereich der Haube angeordnet wird.

Der erfindungsgemäße Probenehmer funktioniert wie folgt.

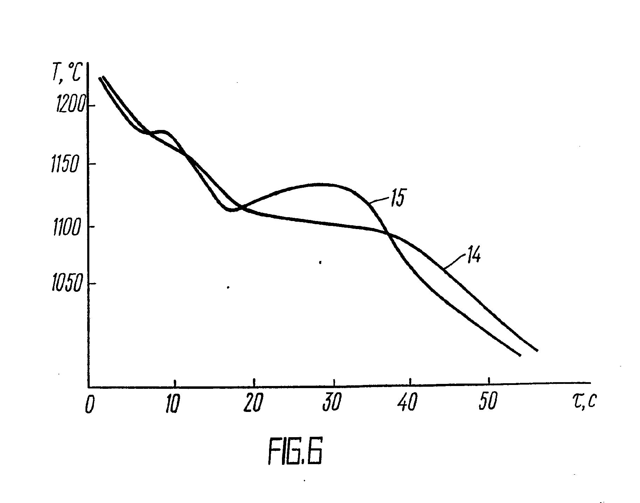

Man taucht den Probenehmer in der erfindungsgemäßen konstruktiven Ausführung das Schmelzbad 12 eines Metalls (Fig. 4a) ein, hält ihn, bis die Haube 5 über die Öffnung 6 mit dem flüssigen Metall (Fig. 4b) gefüllt ist. Danach nimmt man den Probenehmer aus dem Schmelzbad 12 (Fig. 4b) heraus und registriert die Metallkristallisation auf die bekannte Weise. Im Prozeß der Kristallisation ist das erstarrende Metall in der Haube im wesentlichen so gelegen, wie dies Fig. 3 zeigt, d.h. unterhalb der Öffnung 6 oder auf dem gleichen Niveau mit ihr. Diesem Umstand trägt die Anordnung der Öffnung 6 in der Haube 5 gemäß der Erfindung auf dem Abschnitt 7 (oder 9 der Haube), der sich an das Rohr 1 anschließt, bei, während bei dem bekannten Probenehmer (Fig. 5) das kristallisationsfähige Metall, indem es den gesamten Raum der Haube ausfüllt, Lunker bildet, die sich in der Nähe des zugelöteten Endes des Innenrohres 2 befinden.

Fig. 6 zeigt ein Diagramm des Kristallisationsprozesses von Grauroheisenproben mit einer Masse von 90 Gramm im Probenehmer gemäß Ausgangsausbildung (Kennlinie 14), und in dem erfindungsgemäßen Probenehmer (Kennlinie 15). Aus dem Diagramm ist ersichtlich, daß die Kennlinie 14 leichter abfallend ist als die Kennlinie 15, und das zeugt davon, daß die Kennlinie 15 die Wärmeprozesse, die in der kristallisationsfähigen Probe des flüssigen Metalls ablaufen, besser widerspiegelt.

Die Vergleichsdaten beim Einsatz des bekannten und des erfindungsgemäßen Probenehmers bei der thermographischen Analyse sind in den Tabellen 1, 2 angeführt.

Legierung - Grauroheisen. Zusammensetzung der Legierung, Gew.-%: 3,3 C; 2,12 Si; 0,59 Mn; Rest - Fe, Form der Graphitkristalle nach der Mikrostrukturanalyse - lamellar-nadelförmig.

Tabelle 1

| | Nach der Ausgangsausbildung | Probenehmer gemäß der Erfindung |
|---|---|---|
| Vorhandensein von Schwindlunkern im Bereich der Anordnung der Thermoelementlötstelle | ja | nein |
| Vorauszusagende Form der Graphitkristalle | lamellar-verwirbelt | lamellar-nadelförmig |

Vorhandensein von Schwindlunkern im Bereich der Anordnung der Thermoelementlötstelle:

Tabelle 2

| Legierung (Metall) | nach der Ausgangsausbildung | Probenehmer gemäß der Erfindung |
|---|---|---|
| Kupfer | ja | nein |
| Silumine | ja | nein |
| Wood-Legierung | ja(wenig) | nein |

Gewerbliche Anwendbarkeit

Der erfindungsgemäße Probenehmer kann mit Erfolg bei der automatisierten Qualitätskontrolle von Metall bei dessen Schmelzen unter Einsatz von Computertechnik in Betrieben der metallurgischen Industrie angewendet werden.

PATENTANSPRÜCHE

1. Probenehmer zur Bestimmung von Qualitätsparametern eines Schmelzgutes, bestehend aus koaxial ineinander angeordneten Quarzglasrohren (1, 2), die im oberen Teil (3) miteinander verbunden sind, wobei des Aussenrohr (1) in eine Haube (5) übergeht, in der das zugelötete Ende des Innenrohrs (2) zum Unterbringen darin eines Thermopaares (11) angeordnet ist, und eine Öffnung (6) zur Entnahme der Metallschmelze aufweist, dadurch g e k e n n z e i c h n e t, daß die Öffnung (6) zur Entnahme der Metallschmelze in der Haube (5) auf ihrem an das Rohr (1) angrenzenden Abschnitt ausgeführt ist.

2. Probenehmer nach Anspruch 1, dadurch g e k e n n-- z e i c h n e t, daß der Abschnitt der Haube (5) mit der Öffnung (6) zur Entnahme der Schmelze in Form eines abgestumften Kegels (7) ausgebildet ist.

3. Probenehmer nach Anspruch 1, dadurch g e k e n n- z e i c h n e t, daß die Haube (5) in Form eines Zylinders ausgebildet ist, dessen Boden- (8) und oberer (9) Abschnitt sphärisch ausgebildet sind, dabei ist die Öffnung (6) zur Entnahme der Metallschmelze im oberen sphärischen Abschnitt (9) vorgesehen.

1/3

0341316

FIG.1

FIG.2

FIG.5

FIG.3

FIG.4

a) b) c)

FIG.6

# INTERNATIONAL SEARCH REPORT

International Application No PCT/SU 88/00200

## I. CLASSIFICATION OF SUBJECT MATTER (if several classification symbols apply, indicate all) ⁶

According to International Patent Classification (IPC) or to both National Classification and IPC

IPC⁴    G01N 1/10

## II. FIELDS SEARCHED

### Minimum Documentation Searched ⁷

| Classification System | Classification Symbols |
|---|---|
| IPC⁴ | G01N 1/10; C21C 5/04 ÷ 5/30 |

### Documentation Searched other than Minimum Documentation to the Extent that such Documents are Included in the Fields Searched ⁸

## III. DOCUMENTS CONSIDERED TO BE RELEVANT ⁹

| Category ⁎ | Citation of Document, ¹¹ with indication, where appropriate, of the relevant passages ¹² | Relevant to Claim No. ¹³ |
|---|---|---|
| A | SU, A3, 313370 (inofirma "Nippon Kokan Kabushiki Kaisha) 28 October 1971 (28.10.71) see the claims | 1 |
| A | SU, A1, 342912 (Kievsky politekhnichesky institut) 11 July 1972 (11.07.72) see column 1,lines 26-31,column 2,lines 1-16,the claims,the drawing | 1,3 |
| A | SU, A1, 771165 (Kievsky politekhnichesky institut) 15 October 1980(15.10.80) see column 3,lines 1-25,the claims | 1,3 |

⁎ Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 3 January 1989 (03.01.89) | 30 January 1989 (30.01.89) |
| International Searching Authority ISA/SU | Signature of Authorized Officer |

Form PCT/ISA/210 (second sheet) (January 1985)